# EUROPEAN PATENT APPLICATION

(11) **EP 2 610 138 A1**
(43) Date of publication of application: **03.07.2013**
(21) Application number: 11010253.0
(22) Date of filing: 28.12.2011
(51) Int. Cl.: B62D 5/093

(54) **Hydraulic steering device**

(71) Applicant: Sauer-Danfoss ApS, 6430 Nordborg (DK)
(72) Inventor: Arbjerg, Niels, 6470 Sydals (DK)
(74) Representative: Knoblauch, Andreas

(57) **Abstract**

A hydraulic steering device (1) is provided, said steering device (1) comprising a supply port arrangement having a pressure port (P) and a tank port (T), a working port arrangement having two working ports (L, R), a main flow path (8) between the pressure port (P) and the working port arrangement, a return flow path (10) between the working port arrangement and the tank port (T), a variable main orifice (A1) and a flow meter (9) being arranged in said main flow path (8), said main orifice (A1) being closed in a neutral position and open in a steering mode, an amplification flow path (11) being arranged in parallel to the main flow path (8), said amplification flow path (11) including a variable amplification orifice (AU) and being connected to said main flow path (8) downstream said flow meter (9) in a direction from said pressure port (P) to said working port arrangement, said variable amplification orifice (AU) being closed in said neutral position and open in said steering mode.

Such steering device should be operated with enhanced reliability.

To this end, an auxiliary orifice (AUd) is arranged in parallel to the variable amplification orifice (AU) and a drain orifice (AUdr) is arranged between said amplification flow path (11) and the tank port (T), said auxiliary orifice (AUd) and said drain orifices (AUdr) being open in said neutral position.

## Description

The invention relates to a hydraulic steering device comprising a supply port arrangement having a pressure port and a tank port, a working port arrangement having two working ports, a main flow path between the pressure port and the working port arrangement, a return flow path between the working port arrangement and the tank port, a variable main orifice and a flow meter being arranged in said main flow path, said variable main orifice being closed in a neutral position and open in a steering mode, an amplification flow path being arranged in parallel to the main flow path, said amplification flow path including a variable amplification orifice and being connected to said main flow path downstream said flow meter in a direction from said pressure port to said working port arrangement, said variable amplification orifice being closed in said neutral position and open in said steering mode.

Such a hydraulic steering device is known from US 5 819 532.

A hydraulic steering device having a flow amplification has the advantage that larger steering motors can be actuated without increasing the size of the fluid meter. In an emergency steering mode the fluid meter is usually used as auxiliary pump. The torque required for operating such an auxiliary pump increases with the size of the fluid meter.

Such a hydraulic steering device usually is supplied via a priority valve. Such a priority valve often comprises a valve element which is slidably mounted within a housing. Such a priority valve often shows leakages. Although such leakages are usually very small, they can increase a pressure at the pressure port of the steering device.

Furthermore, most hydraulic steering devices are formed by a spool which is rotatably arranged within a sleeve, said sleeve being rotatably arranged within a bore of a housing. A number of variable orifices is formed between said spool and said sleeve. Even in case an orifice is closed, for example a main orifice and an amplification orifice in the neutral position, a small leakage cannot be avoided. This is less critical in the main flow path since the flow meter blocks a flow of hydraulic fluid through the main flow path. However, in the amplification flow path a leakage can occur which leakage could influence adversely the operation of a steering motor connected to the working port arrangement.

The task underlying the present invention is to make sure a reliable operation of a hydraulic steering device.

This task is solved in a hydraulic steering device as mentioned above in that an auxiliary orifice is arranged in parallel to the variable amplification orifice and a drain orifice is arranged between said amplification flow path and the tank port, said auxiliary orifice and said drain orifices being open in said neutral position.

The two additional orifices, i.e. the auxiliary orifice and the drain orifice allow a flow of hydraulic fluid from the pressure port to the tank port in the neutral position of the hydraulic steering device. In this neutral position the variable main orifice and the variable amplification orifice are closed. The auxiliary orifice and the drain orifice are preferably variable orifices which are closed in said steering mode. However, it is also possible to design at least one of these orifices as on/off orifices or to use orifices with a high throttling resistance. Furthermore, in many cases, the hydraulic steering device comprises an additional variable output orifice for each working port, which orifices are closed as well in the neutral position. Since the drain orifice is open in the neutral position of the hydraulic steering device, a flow can be established from the pressure port to the tank port. Such a flow avoids an unwanted pressure increase in one of the working ports. Furthermore, it allows for a temperature equalisation of the hydraulic steering device. Since in the neutral position there is a permanent flow of hydraulic fluid through the steering device, the steering device can be kept at the temperature of the hydraulic fluid. Furthermore, although the steering unit is working in accordance with the static principle it has a response time like a steering unit working in accordance with the dynamic principle.

In a preferred embodiment, said variable main orifice and said amplification orifice have a constant ratio of opening degrees within a predefined range of steering angles. For example, this ratio can be 1:1 leading to an amplification by the factor 2, i.e. the flow through the main flow path is doubled. When the ratio is 2:1, i.e. the fluid resistance through the amplification flow path is only half of that through the main flow path, the flow through the main flow path is tripled. The ratio can be kept constant over the working area of the hydraulic steering device so that there is no change in the steering behaviour within the operating area, i.e. within the predefined range of steering angles.

In another preferred embodiment a ratio of opening degrees of said variable main orifice and said variable amplification orifice varies over a steering angle or a steering speed, respectively. In this case, it is possible to "play" with the two bleed characteristics of the variable main orifice and the variable amplification orifice. For example, in a steering speed of 0-20 rotations per minute (rpm) there is no amplification and the flow starts increasing at 30 rpm. Other steering speeds or steering angles are possible.

Furthermore, it is preferred that the ratio of the opening degrees of said variable main orifice and said variable amplification orifice is asymmetric with respect to the steering direction. In this case it is possible to realise different left/right amplification, i.e. one amplification factor is assigned to the right side and another amplification factor is assigned to the left side. This could be an advantage for example in the case of an unbalanced cylinder.

Furthermore, it is preferred that said auxiliary orifice and said drain orifice are variable and have a constant ratio of opening degrees within a predefined range of steering angles. In this case, the steering behaviour of the steering device is independent of the steering angle.

It is preferred that said drain orifice has a larger opening degree than said auxiliary orifice throughout said predefined range of steering angles. In this case all fluid passing through the auxiliary orifice passes also through the drain orifice without being throttled by the drain orifice. Therefore, an unwanted pressure increase at one of the working ports can be avoided.

Preferably, a load sensing port is provided, said load sensing port being a static load sensing port. This static load sensing port can be connected to a static priority valve. However, the steering device shows a kind of dynamic behaviour since the variable auxiliary orifice is similar to an internal dynamic bleed. Preferably, said load sensing port is connected to a point downstream the variable amplification orifice via a fixed bleed. This fixed bleed limits the volume flow through the load sensing port.

Preferably, said auxiliary orifice and said drain orifice are closed before the variable main orifice and the variable amplification orifice start to open. In this case, a steering angle can be defined which limits the neutral position of the hydraulic steering device and separates this neutral position from the steering mode.

In a preferred embodiment, an overpressure valve is connected to the amplification flow path. Such an overpressure valve limits the pressure in the amplification flow path. Such a limitation is useful to lower the amplification in case of an overpressure.

Preferably, a check valve means is arranged to close a path between the main flow path and said variable amplification orifice preventing a backflow of hydraulic fluid in case of emergency steering, when the fluid meter is used as auxiliary pump.

In a further preferred embodiment, said main orifice is arranged downstream said flow meter. The main orifice is the orifice having the largest throttle resistance. When the hydraulic steering device is operated in an emergency mode, the flow meter is used as auxiliary pump as mentioned above. When the main orifice (which is commonly referred to as A1 orifice) is arranged downstream the flow meter, the flow meter pumps hydraulic fluid through the main orifice. When the main orifice is arranged upstream the flow meter, the flow meter sucks hydraulic fluid through the main orifice. In the latter case, there is a danger of cavitation within the fluid meter.

A preferred example of the invention will now be described in more detail with reference to the drawing, wherein:
- Fig. 1: is a schematic section through a hydraulic steering device,
- Fig. 2: is a schematic illustration of a circuit of a hydraulic steering device, and
- Fig. 3: is a schematic illustration of the opening characteristics of some orifices.

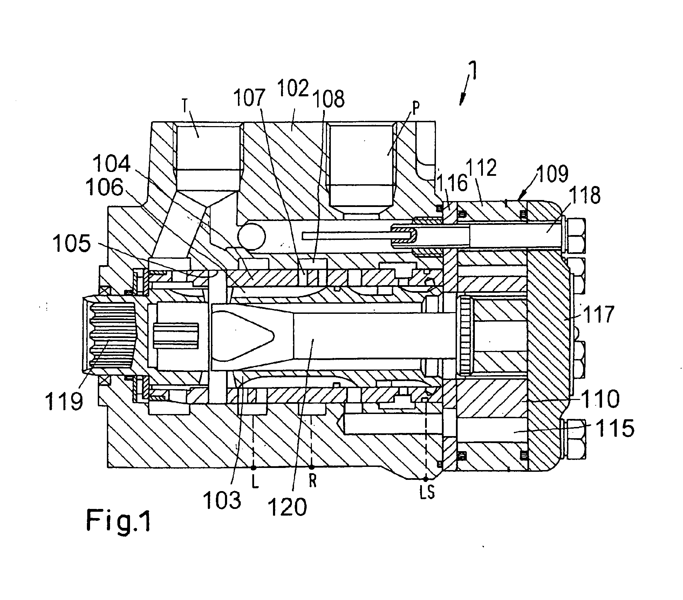

Fig. 1 shows a hydraulic steering device 101 having a housing 102. The housing is provided with a pressure port P, a tank port T, and two working ports L, R.

The steering device 101 comprises a direction valve, said direction valve comprises an inner valve element or spool 103 and an outer valve element or sleeve 104. The sleeve 104 is arranged rotatable in a bore 105 of the housing 101. The spool 103 is positioned rotatable within the sleeve 104. The spool 103 has a plurality of grooves 106 cooperating with bores 107 in the sleeve 104. The bores 107 open into grooves 108 in the wall of the bore 105. The bores 107 and the grooves 106 together form variable orifices as it is known in the art.

The steering device 101 further comprises a gear wheel set 109 used as a fluid meter. As it is known, the gear wheel set 109 comprises a star 110 having a plurality of teeth extending radially outwardly. Furthermore, the gear wheel set 109 comprises a ring 112 having a number of teeth extending radially inwardly. The star 110 has one tooth less than the ring 112. Therefore, a plurality of chambers 115 is formed between the star 110 and the ring 112. As it is known in the art, the chambers 115 are supplied with hydraulic fluid under pressure in order to expand a chamber 115 or the fluid is released from the chamber 115, when the volume of the chamber 115 decreases.

The star 110 is arranged between a first plate 116 and a second plate 117. Those plates 116, 117 are clamped together by means of bolts 118.

The spool 103 comprises a coupling 119 by which the spool 103 can be coupled to the shaft of a steering wheel or the like. When the steering wheel is turned, the spool 103 is rotated relatively to the sleeve 104 and opens some orifices and closes some other orifices as it is known in the art. Hydraulic fluid under pressure flows from the pressure port P to the gear wheel set 109 driving the star 110 which rotates and orbits within the ring 112. Fluid escaping from the gear wheel set 109 is guided through one of the working ports L, R. The rotational movement of the star 110 is transmitted to the sleeve 104 by means of a dog bone 120 which is in engagement with the star 110 via another coupling 121. When the star 110 rotates, the sleeve 104 is rotated relatively to the spool 103 in order to bring the spool 103 and the sleeve 104 again in neutral position.

When the pressure at the pressure port P drops and the vehicle equipped with the steering device 101 has still to be steered, the gear wheel set 109 can be used as auxiliary pump. The torque for driving this pump is produced by the driver of the vehicle via the steering wheel.

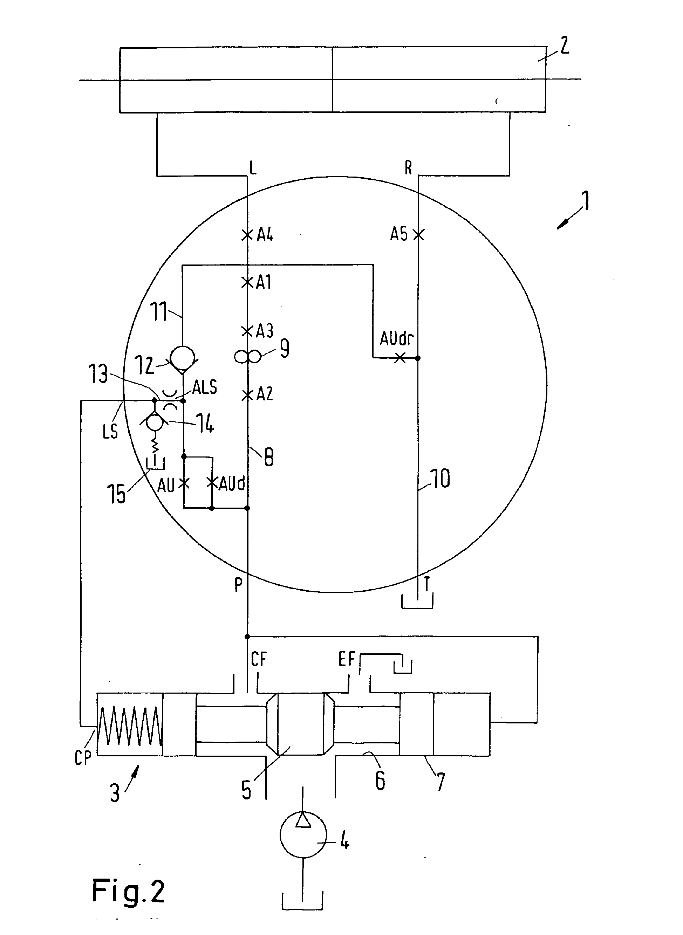

Fig. 2 schematically shows a hydraulic circuit 1 of the steering device 101 described in connection with Fig. 1. The steering device 1 comprises a pressure port P and a tank port T. The pressure port P and the tank port T together form a supply port arrangement. Furthermore, the hydraulic steering device 1 comprises two working ports L, R, said two working ports L, R forming a working port arrangement. A steering motor 2 can be connected to the working port arrangement L, R.

A static priority valve 3 is arranged between a pump 4 and the pressure port P of the hydraulic steering device. The priority valve 3 comprises a priority output CF and an auxiliary output EF. The priority valve 3 comprises a valve element 5 which is slidingly arranged in a bore 6 of a housing 7 as it is known in the art.

However, such a priority valve is not necessary in all cases.

The hydraulic steering device 1 comprises a main flow path 8. A fluid meter 9 is arranged in the main flow path 8. A first variable fluid meter orifice A2 is arranged upstream the fluid meter 9 and a second fluid meter orifice A3 is arranged downstream the fluid meter 9. Furthermore, a variable main orifice A1 is arranged downstream the fluid meter 9.

The orifices A1, A2, A3 can be formed by an arrangement of a spool and a sleeve which are arranged rotatably with respect to each other. Furthermore, the sleeve is arranged rotatably within a housing. The orifices A1, A2, A3 are formed between the spool and the sleeve. As it is known in the art, when an operator turns a steering wheel, the sleeve and the spool are rotated relatively to each other opening the three orifices A1, A2, A3. The fluid flowing through these orifices actuates the fluid meter 9 which rotates the other one of sleeve and spool (which has not been actuated by the steering wheel) back to the neutral position so that it can be made sure that a metered amount of hydraulic fluid can be outputted through one of the working ports L, R. The "neutral position" always includes a certain dead band.

Two working port orifices A4, A5 can as well be formed by the combination of the spool and the sleeve. It depends on the direction of the rotation of spool and sleeve relative to each other which of the two working port orifices A4, A5 is placed in the main flow path 8 and which is placed in a return flow path 10. The return flow path 10 connects the other of the two working ports R, L to the tank port T.

Since such a construction is known in the art, no further explanation is deemed to be necessary.

In an emergency case the pressure at the pressure port P is not sufficient to actuate the steering motor 2. In this case, the fluid meter 9 is used as auxiliary pump. When the steering wheel is turned, the fluid meter 9 is operated sucking hydraulic fluid from the pressure port P and pumping it through the main orifice A1 to one of the working ports L, R. Since the variable main orifice A1 is arranged downstream the fluid meter 9, cavitation in the fluid meter 9 can be avoided or dramatically reduced since there is no suction resistance between the pressure port P and the input of the fluid meter 9.

An amplification flow path 11 is arranged in parallel to the main flow path 8. The amplification flow path 11 is connected to the pressure port P and is connected to the main flow path 8 downstream the variable main orifice A1, i.e. to a point between the variable main orifice A1 and one of the working port orifices A4, A5.

A variable amplification orifice AU is arranged in the amplification flow path 11. An auxiliary orifice AUd is arranged in parallel to a variable amplification orifice AU. This auxiliary orifice AUd is preferably a variable orifice. However, it can be an on/off orifice or an orifice having a high throttling resistance.

A check valve 12 is arranged downstream the variable amplification orifice AU.

A load sensing line 13 branches off from the amplification flow path 11 between the variable amplification orifice AU and the check valve 12. The load sensing line 13 connects the amplification flow path 11 and a load sensing port LS which is connected to a control port CP of the priority valve 3.

A fixed bleed ALS is arranged in the load sensing line 13.

Furthermore, an overpressure valve 14 branches off the load sensing line 13. The overpressure valve 14 opens at a predetermined pressure in the main flow path 11 and allows hydraulic fluid to escape to a tank 15, thereby decreasing the amplification ratio of the amplification flow path.

A drain orifice AUdr connects the main flow path 8 downstream the variable main orifice A1 and the return flow path 10. This drain orifice AUdr is preferably a variable orifice. However, it can be an on/off orifice or an orifice having a high throttling resistance.

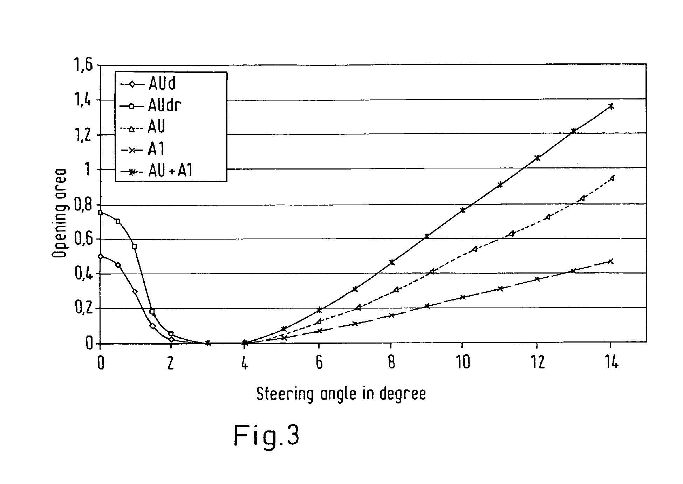

The orifices A1, A2, A3, A4, A5, AU, AUd, and AUdr have different characteristics. Fig. 3 shows some of these characteristics of a preferred embodiment. The characteristics of the fluid meter orifices A2, A3 and of the working port orifices A4, A5 are of less interest here.

As can be seen in Fig. 3, the variable auxiliary orifice AUd and the variable drain orifice AUdr are open in a neutral position and are closed in a steering mode. In the present example the neutral position is defined with a steering angle in a range from 0° to 3°. A steering angle is for example the relative rotation between the spool and the sleeve mentioned above.

It can be seen that the opening area of the variable drain orifice AUdr is always larger than the opening area of the variable auxiliary orifice AUd. Therefore, all hydraulic fluid passing through the variable auxiliary orifice AUd can pass also through the variable drain orifice AUdr. In other words, there is no accumulation of hydraulic fluid upstream the variable drain orifice AUdr. An unwanted pressure increase at one of the working ports L, R can be avoided reliably.

At a steering angle of approximately 4° the variable main orifice A1 and the variable amplification orifice AU start to open. In one embodiment of the ratio of the opening areas of these two orifices is kept constant over the range of steering angles shown in Fig. 2. The opening area of the variable amplification orifice AU is twice of the opening area of the variable main orifice A1. Therefore, a fluid flow is generated through the amplification flow path 11 which is the double of the flow through the main flow path 8. As a result (characteristic "AU + A1") a volume flow is generated being three times the volume flow of the main flow path 8.

In another embodiment, the two bleeds, i.e. a variable amplification orifice AU and the variable main orifice A1 do not have a constant ratio over the steering angle or the steering speed. However, the ratio varies in order to make the amplification variable. For example, from 0-20 RPM (rotations per minute) there is no amplification and the flow starts increasing at 30 RPM. The exact threshold values (20 RPM and 30 RPM) depend on the field of the application of the hydraulic steering device.

Also an asymmetric amplification could be imagined, so that different left/right amplifications appear (one amplification to the right and another one to the left). This could be an advantage for example in the case of an unbalanced cylinder.

Since in the steering mode (starting at a steering angle of 4°) the variable auxiliary orifice AUd and the variable drain orifice AUdr are closed, there is no flow of hydraulic fluid through these two orifices.

However, since in the neutral position (between 0° and 3°) the variable main orifice A1 and the variable amplification orifice AU are closed and the variable auxiliary orifice AUd and the variable drain orifice AUdr are open, any fluid coming from the pressure port P can pass through the steering device 1 without generating an increased pressure within the steering device 1. Therefore, any leakage coming from the priority valve 3 can be accepted.

In the emergency steering mode the fluid meter 9 is used as auxiliary pump as mentioned above. The check valve 12 blocks any reverse flow through the amplification flow path 11, so that all fluid pumped by the fluid meter 9 reaches one of the working ports L, R. When the fluid meter 9 is operated by a steering wheel, the steering angle is large enough to close the variable drain orifice AUdr.

The steering device can be used in a reaction or in a non-reaction steering system. In a reaction steering system the driver can feel at the steering wheel a force acting on the steered wheels. In a non-reaction steering system the driver cannot feel at the steering wheel forces acting on the steered wheels.

## Claims

1. A hydraulic steering device (1) comprising a supply port arrangement having a pressure port (P) and a tank port (T),
a working port arrangement having two working ports (L, R),
a main flow path (8) between the pressure port (P) and the working port arrangement,
a return flow path (10) between the working port arrangement and the tank port (T),
a variable main orifice (A1) and a flow meter (9) being arranged in said main flow path (8),
said main orifice (A1) being closed in a neutral position and open in a steering mode,
an amplification flow path (11) being arranged in parallel to the main flow path (8),
said amplification flow path (11) including a variable amplification orifice (AU) and being connected to said main flow path (8) downstream said flow meter (9) in a direction from said pressure port (P) to said working port arrangement,
said variable amplification orifice (AU) being closed in said neutral position and open in said steering mode,
**characterized in that** an auxiliary orifice (AUd) is arranged in parallel to the variable amplification orifice (AU) and a drain orifice (AUdr) is arranged between said amplification flow path (11) and the tank port (T),
said auxiliary orifice (AUd) and said drain orifices (AUdr) being open in said neutral position.

2. The hydraulic steering device according to claim 1, **characterized in that** said variable main orifice (A1) and said variable amplification orifice (AU) have a constant ratio of opening degrees within a predefined range of steering angles.

3. The hydraulic steering device according to claim 1, **characterized in that** a ratio of the opening degrees of said variable main orifice (A1) and said variable amplification orifice (AU) varies over a steering angle or steering speed, respectively.

4. The hydraulic steering device according to any of claims 1 to 3, **characterized in that** the ratio of the opening degrees of said variable main orifice (A1) and said variable amplification orifice (AU) is asymmetric with respect to the steering direction.

5. The hydraulic steering device according to any of claims 1 to 4, **characterized in that** said auxiliary orifice (AUd) and said drain orifice (AUdr) are variable and have a constant ratio of opening degrees within a predefined range of steering angles.

6. The hydraulic steering device according to any of claims 1 to 5, **characterized in that** said drain orifice (AUdr) has a larger opening degree than said auxiliary orifice (AUd) throughout said predefined range of steering angles.

7. The hydraulic steering device according to any of claims 1 to 6, **characterized in that** a load sensing port (LS) is provided, said load sensing (LS) port being a static load sensing port.

8. The hydraulic steering device according to claim 7, **characterized in that** said load sensing port (LS) is connected to a point downstream the variable amplification orifice (AU) via a fixed bleed (ALS).

9. The hydraulic steering device according to any of claims 1 to 8, **characterized in that** said auxiliary orifice (AUd) and said drain orifice (AUdr) are closed before the variable main orifice (A1) and the variable amplification orifice (AU) start to open.

10. The hydraulic steering device according to any of claims 1 to 9, **characterized in that** an overpressure valve (14) is connected to the amplification flow path (11).

11. The hydraulic steering device according to claim 10, **characterized in that** a check valve means (12) is arranged to close a path (8) between the main flow path and said variable amplification orifice (AU).

12. The hydraulic steering device according to any of claims 1 to 11, **characterized in that** said main orifice (A1) is arranged downstream said flow meter (9).

## Amended claims

### Amended claims in accordance with Rule 137(2) EPC.

**1.** A hydraulic steering device (1) comprising
a supply port arrangement having a pressure port (P) and a tank port (T),
a working port arrangement having two working ports (L, R),
a main flow path (8) between the pressure port (P) and the working port arrangement,
a return flow path (10) between the working port arrangement and the tank port (T),
a variable main orifice (A1) and a flow meter (9) being arranged in said main flow path (8),
said main orifice (A1) being closed in a neutral position and open in a steering mode,
an amplification flow path (11) being arranged in parallel to the main flow path (8),
said amplification flow path (11) including a variable amplification orifice (AU) and being connected to said main flow path (8) downstream said flow meter (9) in a direction from said pressure port (P) to said working port arrangement,
said variable amplification orifice (AU) being closed in said neutral position and open in said steering mode,
**characterized in that** an auxiliary orifice (AUd) is arranged in parallel to the variable amplification orifice (AU) and a drain orifice (AUdr) is arranged between said amplification flow path (11) and the tank port (T),
said auxiliary orifice (AUd) and said drain orifices (AUdr) being open in said neutral position.

**2.** The hydraulic steering device according to claim 1, **characterized in that** said variable main orifice (A1) and said variable amplification orifice (AU) have a constant ratio of opening degrees within a predefined range of steering angles.

**3.** The hydraulic steering device according to claim 1, **characterized in that** a ratio of the opening degrees of said variable main orifice (A1) and said variable amplification orifice (AU) varies over a steering angle or steering speed, respectively.

**4.** The hydraulic steering device according to any of claims 1 to 3, **characterized in that** the ratio of the opening degrees of said variable main orifice (A1) and said variable amplification orifice (AU) is asymmetric with respect to the steering direction.

**5.** The hydraulic steering device according to any of claims 1 to 4, **characterized in that** said auxiliary orifice (AUd) and said drain orifice (AUdr) are variable and have a constant ratio of opening degrees within a predefined range of steering angles.

**6.** The hydraulic steering device according to claim 5, **characterized in that** said drain orifice (AUdr) has a larger opening degree than said auxiliary orifice (AUd) throughout said predefined range of steering angles.

**7.** The hydraulic steering device according to any of claims 1 to 6, **characterized in that** a load sensing port (LS) is provided, said load sensing (LS) port being a static load sensing port.

**8.** The hydraulic steering device according to claim 7, **characterized in that** said load sensing port (LS) is connected to a point downstream the variable amplification orifice (AU) via a fixed bleed (ALS).

**9.** The hydraulic steering device according to any of claims 1 to 8, **characterized in that** said auxiliary orifice (AUd) and said drain orifice (AUdr) are closed before the variable main orifice (A1) and the variable amplification orifice (AU) start to open.

**10.** The hydraulic steering device according to any of claims 1 to 9, **characterized in that** an overpressure valve (14) is connected to the amplification flow path (11).

**11.** The hydraulic steering device according to claim 10, **characterized in that** a check valve means (12) is arranged to close a path between the main flow path (8)and said variable amplification orifice (AU).

**12.** The hydraulic steering device according to any of claims 1 to 11, **characterized in that** said main orifice (A1) is arranged downstream said flow meter (9).
